Europäisches Patentamt

European Patent Office

Office européen des brevets

(11) Publication number: **0 261 496 B1**

# EUROPEAN PATENT SPECIFICATION

(45) Date of publication of patent specification: **17.06.92** (51) Int. Cl.5: **G06F 15/02**

(21) Application number: **87113127.2**

(22) Date of filing: **08.09.87**

(54) **Electronic memorandum.**

(30) Priority: **24.09.86 JP 225731/86**

(43) Date of publication of application:
**30.03.88 Bulletin 88/13**

(45) Publication of the grant of the patent:
**17.06.92 Bulletin 92/25**

(84) Designated Contracting States:
**DE FR GB**

(56) References cited:
**US-A- 3 999 050**
**US-A- 4 274 146**
**US-A- 4 302 752**

**PATENT ABSTRACTS OF JAPAN, vol. 8, no. 286 (P-324)[1723], 27th December 1984; & JP-A-59 149 547 (TOSHIBA K.K.) 27-08-1984**

**"The design of the UNIX operating system", M.J. Bach, Prentice/Hall, 1986, ISBN 0-13-201757-1 025**

(73) Proprietor: **SEIKO INSTRUMENTS INC.**
**31-1, Kameido 6-chome Koto-ku**
**Tokyo 136(JP)**

(72) Inventor: **Kubota, Hirokazu**
**c/o Seiko Instruments Inc. 31-1, Kameido 6-chome**
**Koto-ku Tokyo(JP)**

(74) Representative: **Tiedtke, Harro, Dipl.-Ing. et al**
**Patentanwaltsbüro Tiedtke-Bühling-Kinne-Grupe-Pellmann-Grams-Struif Bavariaring 4**
**Postfach 20 24 03**
**W-8000 München 2(DE)**

# Description

## BACKGROUND OF THE INVENTION

This invention relates in general to an electronic display apparatus, in particular to an electronic memorandum for electrically storing information and displaying them on request.

In recent years, many kinds of portable electronic display apparatus are available. Electronic diary is one of the such portable apparatus. An electronic diary which stores schedule and message, and displays the message when real time is equal to the schedule time is disclosed in U.S.Pat.No. 3,999,050.

This electronic diary is combined with an electronic calculator and has calendar and clock functions and diary storage means in which a selected schedule is stored and read out. A clock-calendar means generates the time of today which is compared by a time comparison logic with the time entered and stored in combination with a message concerning an important event. In the diary-mode during the process of message registration the message data is displayed for visual verification. The electronic diary normally operates as a digital clock-calendar, while the time comparison logic continuously compares stored message time with the real time of today. When such time comparisons find a time match, the normal clock-calendar information is inhibited to allow the stored message data to be visually displayed in combination with a corresponding alarm sound. After a reset the electronic diary returns to normal clock-calendar display mode. The date and time entered together with a message data only relate to the present year and do not relate to the following year.

US-A-4 302 752 (WEITZLER) describes a mechanism for giving audio messages at specified times, including repetitively, but does not describe any mechanism for processing the timing data.

A further method for storing timing data is disclosed in the publication "The Design of the UNIX Operating System", M. J. Bach, Prentice-Hall, 1986. Time-dependent events in combination with timing data entered in an arbitrary sequence are sorted and stored in a table according to their point of time. When a new entry is made the system finds the correct storage position in the table so as to effect a time-dependent arrangement of the timing data. With this arrangement in time series only the first point of time of the table has to be checked and compared with the present time, thus, reducing processing effort and processing time.

The information of the commemoration day may also be stored in an electronic memorandum which is able to store a memorandum electrically and to display the content of the memorandum. We can ascertain the information by viewing the memorandum if the same is stored.

In the electronic diary, past information is automatically deleted even if the information relates to commemoration day, since the electronic memorandum does not have a time management function.

Accordingly, if it is necessary to similarly obtain the information on the commemoration day also in the next year, however, the troublesome procedure will be required for the commemoration day to be restored as a new information by depressing all the keys for writing the information.

## SUMMARY OF THE INVENTION

It is therefore an object of the present invention to provide an electronic memorandum having a time management function for revising past date information automatically.

It is another object of the present invention to provide an electronic memorandum which provides information on a commemoration day on the same date each year if once a commemoration day has been stored therein.

It is a further object of the present invention to provide an electronic memorandum which changes automatically the date information to the date information for the next year, if an information belongs to a date older than the current date.

These objects of the invention are achieved by an electric memorandum apparatus for storing memoranda electrically and displaying the same on request comprising input means for inputting entries including date, message and an indication whether an entry is to be repeated yearly, storing means for storing entries in date order in a memory, display means for displaying said entries, time counting means for counting a present time and date, comparison means for comparing said present date with the date part of the first of said entries in said memory, removing means for removing said first entry from said memory when said present date is equal to said date part, determining means for determining whether said indication part of said first entry indicates that said entry is to be repeated yearly, and date changing means for changing said date part of said entry from this year to next year, and for supplying said changed entry to second storing means for storing in said memory.

Thus, according to the present invention the electronic memorandum for electrically storing information and displaying the same on request processes message and date and time information in order to check the entered data if an accompanying memorial date information is included. With respect to the memorial date information included in the data previously entered a data setting means sets a memorial date yearly which is stored. The present time and date is compared with the time and date information stored in a memory and when the present date and time is identical with the stored date and time information, the additionally stored message is displayed to draw a persons' attention to the message. An accompanying memorial date yearly is identified by determining means and according to this memorial date yearly date changing means connected inbetween the determining means and the memory changes the date information from the present year to the next year. The new date information is stored again so as to effect a desired yearly reminder.

The desired yearly reminder is obtained by automatically changing a commemoration day of the present year to the next year by determining means and date changing means immediately after the present date and time was identical with date and time of the original commemoration day. Therefore the electronic memorandum does not require any magnetical store means like a recorder. Thus, no mechanical parts are necessary which reduce the reliability of the electronic reminder and increase the costs and the mechanical dimensions of the device.

Changing a commemoration day of the present year to the next year by the date changing means is performed very quickly and automatically without complicated operation.

These objects of the invention will become apparent and obvious to those skilled in the pertinent art upon referring to the following description provided in connection with the accompanying drawings, of which:

BRIEF DESCRIPTION OF DRAWINGS

Fig. 1 is a representative functional block diagram of an electronic memorandum in accordance with the present invention.
Fig. 2 is a rough circuit diagram showing one embodiment of the present invention.
Fig. 3 is a flow chart for arranging inputted information in a time series.
Fig. 4 is a flow chart for rewriting date information on a commemoration date in this embodiment.

DESCRIPTION OF THE PREFERRED EMBODIMENT

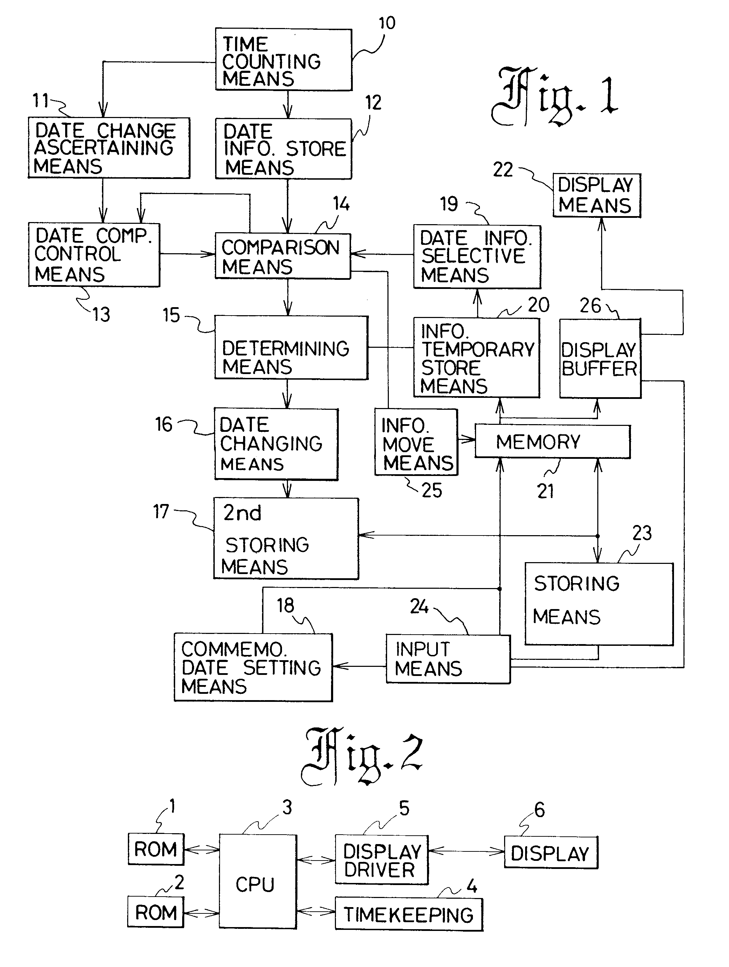

There is shown in Fig. 1 a functional structure of an electronic memorandum. The operator inputs into the electronic memorandum dated information, such as information on schedule, commemoration days, etc., via input means 24. The input means 24 includes a plurality of keys comprising ten keys for inputting date or numeral information, character keys for inputting message and some function keys. The input means 24 further includes an input buffer for storing inputted data temporarily. A commemoration day setting key is one of the functional keys. The operator depresses the setting key for inputting a commemoration day. When the setting key is depressed, commemoration date setting means 18 generates data defining a commemoration day. The data stored in the input buffer and the data generated by the commemoration date setting means 18 are sent to a memory 21 in the form of a piece of information. Storing means 23 designates the address in which the information is stored, if a return key or an enter key is depressed. The storing means 23 manages to arrange the contents of the information in a time series in the memory 21. The information having the today's date or the earliest date is always stored in the top of the address of the memory 21. Information temporary store means 20 reads out and stores the information stored as the top address of the memory 21. A display buffer 26 also usually stores the top information. The display buffer 26 also may read out and store the information stored in any address in accordance with the operation of the input means 24. Display means 22 displays the information stored in the display buffer 26. Time counting means 10 counts a present time and date. Date information store means 12 stores date information counted by the time counting means 10. Date change ascertaining means 11 checks and ascertains that the date is changed and outputs a signal to date comparison control means 13, if the date is changed. The date comparison control means 13 generates a control signal in accordance with the signal sent from the date change ascertaining means 11. The control signal is sent to comparison means 14 until a comparison end signal is returned from the comparison means 14. The comparison means 14 is inputted the content of the date information store means 12 and the output of the date information selective means 19 and compares both of the date information when the control signal is inputted from the date comparison control means 13. When the date sent from the date information selective means 19 is not the past date, the comparison means 14 outputs the comparison end signal to the date comparison control means 13, and waits for an input of a next control signal. When the date sent from the date information selective means 19 is a past date, the comparison means 14 sends signals to determining means 15 and to information move means 25. The determining means 15 reads out the content of the information temporary store means 20 and checks whether the information includes data defining a commemoration day. The information move means 25 shifts up the all informations by one information. When the information dose not include the data defining commemoration day, the determining means 15 reads the information newly stored in the information temporary store means 20. When the information includes the data defining a commemoration day, the determining means 15 sends the information to date changing means 16. The date changing means 16 calculates a date of the week as a date of next year, revises the date of the information and sends the revised information to the memory 21. Second storing means 17 designates an address so that the informations are arranged in time series. The revised information is restored in the memory 21.

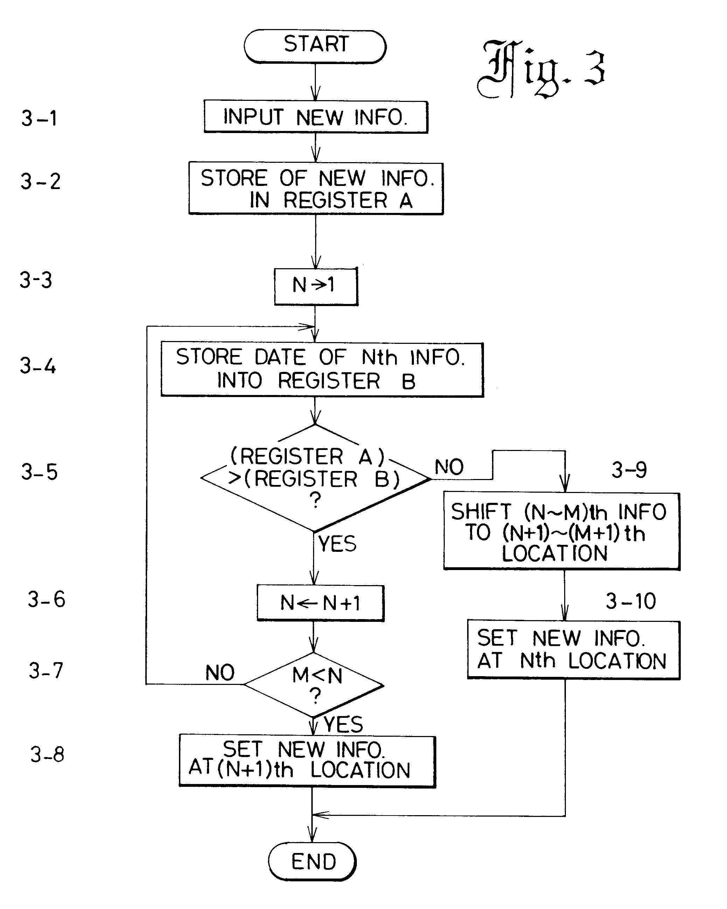

Fig. 2 is a block diagram of this embodiment which includes a read only memory (ROM) 1 which stores programs, a random access memory (RAM) 2 which stores various information, timekeeping means 4 which outputs time information, and a central processing unit (CPU) 3 which receives time information from the timekeeping means 4, controls ROM 1 and RAM 2 to input various information to them, and displays the information on display 6.

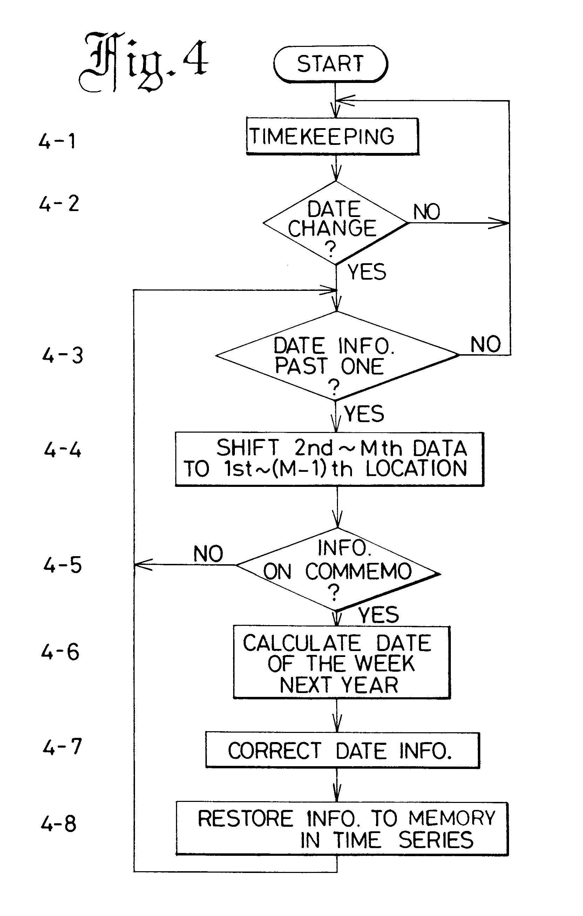

Fig. 3 shows a flow of a time series train. This flow is executed by the storing means 23 to retrieve a desired position when various items of information stored in the memory 21 are inputted. Assume that M informations stored already in the memory 21 are arranged in a time series. A new information is inputted (step 3-1), and the date of the new information is stored in register A (step 3-2). A counter N is cleared (step 3-3), the Nth information in the memory 21 is stored in a register B (step 3-4). At step 3-5 the registers A and B are compared. If the content of registers A is larger than or equal to the content of register B, the counter is increased (step 3-6); it is then checked if N is larger than M (step 3-7); if not, return to step 3-4. The loop of steps 3-5, 3-6, 3-7, 3-4 is repeated until the content of register A is determined to be for the nearer future. If at step 3-7 N is larger than M, a new information is inputted at the end of the informations stored in the memory 21. At step 3-5, if no, a new information is inserted into an Nth position by the processing at steps 3-9, 3-10. At step 3-9, all the information stored in the Nth location to the Mth location are shifted down by one location, and at step 3-10, new information is stored at the Nth location. If the above processing is performed at all the times when the information is inputted, the information stored in the memory 21 is arranged at all the times in the order of a time series.

Fig. 4 shows a flowchart for rewriting information on the date of a commemoration day. The output from input means 24 and the data sent from the commemoration date setting means 18 by the output from the input means 24 are added and stored in the memory 21. The information stored in memory 21 is inputted in accordance with the flow of Fig.3.

The time counting means 10 can output date, time information, etc. The present date is stored in the date information store means 12. The date change ascertaining means 11 monitors the time information sent from the time counting means 10 (a loop of steps 4-1, 4-2). When the date is changed, the information selected by the date information selective means 19 is compared with date information in the date information store means 12 by the comparison means 14 (step 4-3). If it is not a past information, the end of the processing is reported to the date comparison control means 13 and the processing ends. If it is a past information, the determining means 15 determines whether or not the information is on the commemoration day (step 4-4). If no, the processing of the information to be compared ends. If the information is on the commemoration day, the date changing means 16 calculates a date of the week as a date of the next year (step 4-5), and the information whose address is changed to an address designated by the second storing means 17 is stored in the memory 21 in accordance with the flow of a time series train of Fig. 3 (steps 4-6,4-7).

Steps 4-3, 4-4, 4-5, 4-6, and 4-7 are repeated until the past date information disappears from the memory 21.

As a specific example, assume that, for example, the information "Mr. S's birthday is October 4 Sunday" is stored in memory 21 with the data defining a commemoration day. And now it is 11 pm on October 4. The electronic memorandum may show that today is Mr. S's birthday. After one hour, the date is changed into October 5, and S's birthday information gets to a past information. In steps 4-3, and 4-4, this is checked. It is checked that the information has the data defining a commemoration day in step 4-5. A date of the week as a date of the next year, e.g. Monday, is calculated in step 4-6, and the date information is correct to October 4 Monday in step 4-7. The information "Mr. S's birthday is October 4 Monday" is restored to the memory 21.

## Claims

1. Electric memorandum apparatus for storing memoranda electrically and displaying the same on request comprising:
   input means (24) for inputting entries including date, message and an indication whether an entry is to be repeated yearly,

storing means (23) for storing entries in date order in a memory (21),

display means (22) for displaying said entries,

time counting means (10) for counting a present time and date, comparison means (14) for comparing said present date with the date part of the first of said entries in said memory (21),

removing means (20, 25) for removing said first entry from said memory (21) when said present date is equal to said date part,

determining means (15) for determining whether said indication part of said first entry indicates that said entry is to be repeated yearly, and date changing means (16) for changing said date part of said entry from this year to next year, and for supplying said changed entry to second storing means (17) for storing in said memory (21).

**Revendications**

1. Appareil d'aide-mémoire électrique pour stocker des aide-mémoires de manière électrique et les afficher à la demande, comprenant :

    un moyen d'entrée (24) pour entrer des entrées incluant une date, un message et une indication de si oui ou non une entrée doit être répétée chaque année,

    un moyen de stockage (23) pour stocker des entrées selon l'ordre des dates dans une mémoire (21),

    un moyen d'affichage (22) pour afficher lesdites entrées,

    un moyen de comptage temporel (10) pour compter un instant et une date courants, un moyen de comparaison (14) pour comparer ladite date courante à la section de date de la première desdites entrées effectuées dans ladite mémoire (21),

    un moyen d'enlèvement (20, 25) pour ôter ladite première entrée de ladite mémoire (21) lorsque ladite date courante est égale à ladite section de date, et

    un moyen de détermination (15) pour déterminer si oui ou non ladite section d'indication de ladite première entrée indique que ladite entrée doit être répétée chaque année et un moyen de modification de date (16) pour modifier ladite section de date de ladite entrée et la faire passer de l'année courante à l'année suivante et pour appliquer ladite entrée modifiée à un second moyen de stockage (17) pour la stocker dans ladite mémoire (21).

**Patentansprüche**

1. Elektronische Aufzeichnungsvorrichtung zur elektrischen Speicherung von Notizen und Darstellen dieser auf Anforderung, die umfaßt:

    - Eingabeeinrichtungen (24) zum Eingeben von Vermerken, die ein Datum, eine Mitteilung sowie eine Angabe, ob ein Vermerk jährlich zu wiederholen ist, enthalten,

    - Speichereinrichtungen (23) zum Speichern von Vermerken in Datumordnung in einem Speicher (21),

    - Anzeigeeinrichtungen (22) zur Darstellung der erwähnten Vermerke,

    - Zeitzähleinrichtungen (10) zur Zählung einer gegenwärtigen Zeit und eines gegenwärtigen Datums, Vergleichseinrichtungen (14) zum Vergleichen der genannten gegenwärtigen Zeit mit dem Datumteil des ersten der besagten Vermerke in dem erwähnten Speicher (21),

    - Beseitigungseinrichtungen (20, 25) zur Beseitigung des besagten ersten Vermerks aus dem erwähnten Speicher (21), wenn das besagte gegenwärtige Datum gleich dem besagten Datumteil ist, und

    - Bestimmungseinrichtungen (15) zur Bestimmung, ob der erwähnte Angabeteil des besagten ersten Vermerks angibt, daß dieser besagte Vermerk jährlich zu wiederholen ist, und Datenänderungseinrichtungen (16) zum Ändern des besagten Datumteils des genannten Vermerks von diesem Jahr zum nächsten Jahr sowie zur Zuführung des genannten geänderten Vermerks zu zweiten Speichereinrichtungen (17) zur Speicherung in dem erwähnten Speicher (21).

Fig. 1

Fig. 2

# Fig. 3

```
                    ( START )
                        │
3-1          ┌──────────────────────┐
             │   INPUT NEW INFO.     │
             └──────────────────────┘
                        │
3-2          ┌──────────────────────┐
             │  STORE OF NEW INFO.   │
             │    IN REGISTER A      │
             └──────────────────────┘
                        │
3-3            ┌─────────────┐
               │   N → 1     │
               └─────────────┘
                        │
3-4          ┌──────────────────────┐
             │ STORE DATE OF Nth INFO.│
             │   INTO REGISTER B     │
             └──────────────────────┘
                        │
3-5            (REGISTER A)              3-9
             >(REGISTER B) ──NO──  ┌──────────────────┐
                  ?                │ SHIFT (N~M)th INFO│
                 │YES             │ TO (N+1)~(M+1)th  │
                                   │    LOCATION      │
3-6        ┌─────────────┐         └──────────────────┘
           │  N ← N+1    │                 │       3-10
           └─────────────┘         ┌──────────────────┐
                  │                 │ SET NEW INFO.    │
3-7        NO── M<N                 │  AT Nth LOCATION │
                  ?                 └──────────────────┘
                 │YES
3-8      ┌──────────────────────┐
         │   SET NEW INFO.      │
         │ AT (N+1)th LOCATION  │
         └──────────────────────┘
                        │
                    ( END )
```

7

# Fig.4

START

4-1　TIMEKEEPING

4-2　DATE CHANGE ? — NO / YES

4-3　DATE INFO. PAST ONE ? — NO / YES

4-4　SHIFT 2nd ~ Mth DATA TO 1st ~ (M-1)th LOCATION

4-5　INFO. ON COMMEMO ? — NO / YES

4-6　CALCULATE DATE OF THE WEEK NEXT YEAR

4-7　CORRECT DATE INFO.

4-8　RESTORE INFO. TO MEMORY IN TIME SERIES